(19) Europäisches Patentamt
European Patent Office
Office européen des brevets

(11) Publication number: **0 266 986 A2**

# (12) EUROPEAN PATENT APPLICATION

(21) Application number: 87309662.2

(22) Date of filing: 02.11.87

(51) Int. Cl.4: C08G 59/40 , C08L 63/00 , //(C08L63/00,67:00),(C08L63/00-,79:08),(C08L63/00,101:00)

(30) Priority: 06.11.86 US 927912

(43) Date of publication of application: 11.05.88 Bulletin 88/19

(84) Designated Contracting States: AT BE CH DE ES FR GB IT LI LU NL SE

(71) Applicant: AMOCO CORPORATION
200 East Randolph Drive
Chicago Illinois 60601(US)

(72) Inventor: Gardner, Hugh C.
1273 Millstone River Road
Somerville New Jersey 08876(US)
Inventor: Qureshi, Shahid P.
5 Surrey Lane
Piscataway New Jersey 08854(US)

(74) Representative: Laredo, Jack Joseph et al
Elkington and Fife High Holborn House 52/54
High Holborn
London, WC1V 6SH(GB)

## (54) Resin compositions comprising aromatic cyanate esters, polyepoxide compounds and thermplastic polymers and prepreg made therefrom.

(57) Novel curable resin compositions are disclosed containing an aromatic cyanate ester, a polyepoxide compound and a thermoplastic polymer. These compositions provide improved prepreg processing characteristics and thermal and mechanical properties. Bismaleimides may optionally be added to the composition.

EP 0 266 986 A2

Xerox Copy Centre

# RESIN COMPOSITIONS COMPRISING AROMATIC CYANATE ESTERS, POLYEPOXIDE COMPOUNDS AND THERMOPLASTIC POLYMERS AND PREPREG MADE THEREFROM

## FIELD OF THE INVENTION

This invention relates to novel thermoset resins and, more particularly, to thermoset resins comprising polycyanurates, epoxy resins and thermoplastics, and to curable precursors for their preparation. Still more particularly, this invention relates to compositions comprising a polymerizable cyanate ester compound, a polymerizable epoxy compound, and a thermoplastic, and to thermoset materials prepared for these compositions. These compositions are particularly useful for preparing composites and prepreg materials which comprise a fibrous reinforcement embedded in the thermoset resins.

## BACKGROUND OF THE INVENTION

Advanced composites are high strength, high modulus materials which are finding increasing use as structural components in aircraft, automotive, and sporting goods applications. Typically, they comprise structural fibers such as carbon fibers in the form of woven cloth or continuous filaments embedded in a thermosetting resin matrix.

Most advanced composites are fabricated from prepreg, a ready-to-mold sheet of reinforcement impregnated with uncured or partially cured resin. For most uses, prepreg must possess a special balance of physical and chemical properties, particularly including the ability to lightly adhere to a metal surface or other plies of prepreg (tack) and the ability to be folded around corners having a radius as small as 1/4 inch without damage (drape). Tack and drape are particularly important for use in laying up large complex parts such as aircraft wings or fuselages. The reactivity and, hence, the shelf or storage life of prepreg is also important. For example, most aircraft applications require prepreg with low reactivity at room temperature that will retain acceptable tack and drape for at least 10 days, yet be rapidly curable at elevated temperatures (i.e., in 2 to 4 hours at 350-470°F).

Resin systems containing an epoxide resin and aromatic amine hardener are often used in prepreg since they possess an appropriate balance of properties. State-of-the-art composites made with these formulations have high compressive strengths, good fatigue characteristics, and low shrinkage during cure. However, most epoxy formulations absorb as much as 5 to 6 wt% moisture which causes property deterioration at elevated temperatures and reduces the dimensional stability of cured composites. As a result, they are not suitable for use at 130°C or greater in a moisture-saturated condition. Since most epoxy formulations used in prepreg are also brittle, the resulting composites have low toughness and poor impact resistance.

Other curable resin systems are known for these applications. For example, in U.S. Patent No 3,562,214, resins comprising aromatic cyanic acid esters and polyepoxide compounds are disclosed. The cyanic acid ester and the epoxide compound are generally heated together to provide a homogeneous liquid which can be cast into molds. Also disclosed is the use of solutions of these components in a solvent such as acetone, methyl ethyl ketone, and the like for impregnating webs of paper or fabric which can be employed in making laminates.

Also useful are the compositions described in U.S. Patent No. 4,110,364 that comprise a cyanate ester, a bismaleimide, and, optionally, an epoxy compound; and the compositions described in U.S. Patent No. 4,157,360, which include a cross-linked cyanate polymer and a thermoplastic polymer. The latter compositions may be prepared from a solution of the thermoplastic polymer and aromatic dicyanate monomer by removing the solvent, then curing the resulting intimate mixture by heating at a temperature above about 200°C. The compositions may also be prepared from a melt containing the polymer and monomer by heating at 200°C or higher to yield a partially cured or cured composition. These compositions, typically containing equal parts by weight of the thermoplastic polymer and the cyanate monomer, do not possess the appropriate tack and drape required generally for many prepreg applications.

A curable composition comprising a polyphenylene ether resin, a bismaleimide and/or a cyanate ester and an epoxy compound is disclosed in U.S. Patent No. 4,496,695. However, since polyphenylene ethers are high temperature, high melt-viscosity resins and are insoluble in these liquid components, the compositions can only be prepared by first dissolving the components in a suitable solvent.

A need clearly exists, therefore, for new and effective solvent-free resin compositions which can overcome all or at least many of the above-noted problems.

## SUMMARY OF THE INVENTION

This invention relates to novel thermoset resins and to curable compositions for preparing the thermoset resins. The curable compositions are particularly useful for making prepreg and in forming thermoset composites. More specifically, the present invention is a solvent-free, curable composition comprising a polymerizable cyanate ester, a polymerizable epoxy compound and a thermoplastic, as well as thermoset resins prepared from said curable compositions. The curable compositions may further comprise one or more additional polymerizable components, including a bismaleimide or a bismaleimide/cyanate based prepolymer (commonly referred to as a BT resin), and may be further compounded with cure accelerators, fillers and fibrous reinforcement.

Unreinforced castings made from curable formulations of this invention exhibit greatly improved mechanical properties and improved toughness compared with those commonly exhibited by the cyanate and epoxy containing compositions of U.S. Patent No. 3,562,214. The high toughness and good hot/wet properties of the cured compositions make them especially suitable for use in the production of tough, high-performance, fiber-reinforced composites. Composites prepared from these thermoset compositions exhibit an excellent balance of toughness and hot/wet properties, with unexpectedly low water uptake, high glass transition temperatures and high tensile properties. Prepreg prepared using these compositions possesses excellent and highly useful processability, drapability and tack characteristics.

## DETAILED DESCRIPTION OF THE INVENTION

The cyanate ester component of the curable compositions of the present invention is a polymerizable aromatic cyanate ester compound having a plurality of cyanate ester groups per molecule. Suitable cyanate esters include those known to be useful in the production of polycyanurates and may be generally represented by the formula:

R—(0-C≡N)$_m$

wherein m is an integer of from 2 to 5 and R is an aromatic radical, the cyanate groups being attached to an aromatic ring. The aromatic radical R will contain at least 6 carbon atoms, and may be derived, for example, from aromatic hydrocarbons such as benzene, biphenyl, naphthalene, anthracene, pyrene or the like. The aromatic radical R may also be derived from a polynuclear aromatic hydrocarbon in which at least two aromatic rings are attached to each other through a bridging member. Typical are bridging members selected from the group consisting of:

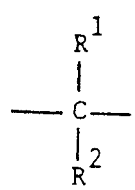

wherein $R^1$ and $R^2$ are independently selected from hydrogen and alkyl groups containing 1 to 4 carbon atoms,

-O-, $-CH_2OCH_2-$, -S-,

-C(O)-, -OC(O)O-, $-S(O)_2-$, -S(O)-,

-OP(O)O-and $OP(O)_2O-$

Also included are polynuclear aromatic radicals bridged by cycloalklylene groups and the like, as well as cyanates derived from novolak-type phenolic resins, i.e., the cyanate esters of these phenolic resins. The aromatic radical R may also contain further, ring-attached, nonreactive substituents.

Cyanate esters useful in the practice of this invention may include, for example, 1,3-dicyanatobenzene; 1,4-dicyanatobenzene; 1,3,5-tricyanatobenzene; 1,3-, 1,4-, 1,6-, 1,8-, 2,6-or 2,7-dicyanatonaphthalene; 1,3,6-tricyanatonaphthalene; 4,4'-dicyanatobiphenyl; bis(4-cyanatophenyl)methane; 3,3',5,5'-tetramethyl bis(4-cyanatophenyl)methane; 2,2-bis(3,5-dichloro-4-cyanatophenyl)propane; 2,2-bis(3,5-dibromo-4-dicyanatophenyl)propane; bis(4-cyanatophenyl)ether; bis(4-cyanatophenyl)sulfide; 2,2-bis(4-cyanatophenyl)-

propane; tris(4-cyanatophenyl)phosphite; tris(4-cyanatophenyl)phosphate; bis(3-chloro-4-cyanatophenyl)-methane; cyanated novolak; cyanated bisphenol-terminated polycarbonate or other thermoplastic oligomer; and mixtures thereof. Also included are cyanates of poly(alkenyl phenols) disclosed in U.S. Patent No. 4,477,629, cyanates from bisphenols of dicyclopentadiene which are disclosed in, for example, U.S. Patent No. 4,528,366, and the cyanates disclosed in British Patent No. 1,305,702. Especially preferred are the dicyanate of resorcinol, the dicyanate of hydroquinone, the dicyanate of 3,3',5,5'-tetramethyl diphenyl sulfide, 2,2-bis(4-cyanatophenyl)propane, bis(4-cyanatophenyl)thioether, and the cyanates of bisphenols of dicyclopentadiene of U.S. Patent No. 4,528,366. These and a wide variety of other cyanate esters are widely known in the art and many are commercially available for use in preparing polycyanurates.

The cyanate esters may be used simply as mixtures. The cyanate esters may also be used in the form of a prepolymer, made by heating a polyfunctional cyanate monomer at a temperature of 130° to 220°C for a period of 0.1 to 15 hours, trimerizing the cyanate ester and increasing the molecular weight. Preferred prepolymers are those having an average molecular weight of at least 400, especially up to 6000. Also useful are mixtures of the prepolymer with monomeric cyanate esters. Many of the commercially available cyanate esters are such mixtures of cyanate monomers and prepolymers.

The cyanate ester component of the instant formulations may also be used in the form of a BT resin. BT resins are those mixtures that result from heating blends of cyanates and bismaleimides as is disclosed in U.S. Patent No. 4,110,364, which is incorporated herein by reference.

Epoxy resins useful in the practice of this invention include any of the great variety of polyfunctional epoxy resins widely known and readily available from commercial sources. Among these are the polyglycidyl derivatives of phenolic compounds, such as those available commercially under the trade names such as Epon 828, Epon 1001, Epon 1009 and Epon 1031 from Shell Chemical Co., DER 331, DER 332, DER 334 and DER 542 from Dow Chemical Co., and BREN-S from Nippon Kayaku, Japan. Other suitable epoxy resins include polyepoxides prepared from polyols and the like and polyglycidyl derivatives of phenol-formaldehyde novolaks. The latter are commercially available as DEN 431, DEN 438 and DEN 439 from Dow Chemical Company, while cresol analogs are available as ECN 1235, ECN 1273 and ECN 1299 from Ciba-Geigy Corporation. SU-8 is a bis-A based resin from Interex, Inc. Polyglycidyl adducts of amines, aminoalcohols and polycarboxylic acids are also useful in the practice of this invention. Commercially available resins of this type include Glyamine 135, Glyamine 125, and Glyamine 115 from F.I.C. Corporation, Araldite MY-720, Araldite 0500, and Araldite 0510 from Ciba-Geigy Corporation and PGA-X and PGA-C from The Sherwin-Williams Co.

Also suitable are epoxy-terminated thermoplastic polymers such as the epoxy-terminated polysulfones disclosed in U.S. Patent No. 4,448,948.

The second group of epoxy resins useful in the practice of this invention are those prepared by epoxidizing dienes or polyenes. Resins of this type include bis(2,3-epoxycyclopentyl) ether and the reaction products thereof with ethylene glycol, described in U.S. Patent No. 3,398,102. Commercial examples of these epoxides include vinylcyclohexene dioxide, 3,4-epoxycyclohexylmethyl 3,4-epoxycyclohexane carboxylate, 3,4-epoxy-6-methylcyclohexylmethyl 3,4-epoxy-6-methylcyclohexane carboxylate, bis(3,4-epoxy-6-methylcyclohexylmethyl) adipate, dipentene dioxide, and 2-(3,4-epoxycyclohexyl-5,5-spiro-3,4-epoxy) cyclohexanemetadioxane, as well as epoxidized poly-butadiene obtainable as Oxiron 2001 from FMC Corp.

Other epoxy resins not specifically described above may also be used as modifiers in the resin formulations of the present invention.

The preferred epoxy resins are bisphenol A epoxy resins, epoxy-novolak resins, 1,1,2,2-tetrakis (4-hydroxyphenyl) ethane, the diglycidyl ether of 4,4'-dihydroxy diphenyl sulfone, the diglycidyl ether of tetrabromobisphenol A, and BREN-S.

In the compositions of this invention, the cyanate ester and the epoxy resin will be present in amounts based on the ratio between the cyanate (-OCN) groups and the epoxy groups. Generally, the ratio of cyanate groups to epoxy groups will lie in the range of from 1:1 to 100:1 and, more preferably, from 1.5:1 to 50:1.

Compositions of this invention will also include a thermoplastic polymer which is miscible with the cyanate ester and the epoxy resin components of the curable composition. The thermoplastic polymers which may be used in this invention will have a glass transition temperature above about 150°C, and may, for example, include polyarylethers such as those described in U.S. Patents 4,108,837, 4,175,175 and 4,332,209. Also suitable are polycarbonates, polyetherimides, the poly(amide-imide) thermoplastics, and polyarylates, as well as mixtures thereof.

The preferred thermoplastics inlcude UDEL® P-1800 polysulfone and ARDEL® D-100 polyarylate (available from Amoco Performance Products, Inc.), Lexan-105 polycarbonate, Lexan-3250 polyestercarbonate, and ULTEM-1000 polyetherimide (available from General Electric Co.) and Victrex P-200 (available form Imperial Chemical Industries), as well as Radel R® polysulfone (available from Amoco Performance Products Inc.).

The compositions of this invention will comprise from 50 to 98 wt%, preferably from 60 to 90 wt%, of the cyanate ester component. The epoxy resin will be present in an amount of from 1 to 45 wt%, preferably about 5 to 32 wt%, and from 1 to 20 wt%, preferably from 1.5 to 14 wt% of the thermoplastic will be present. The cyanate ester component may, as stated hereinabove, be in the form of monomeric cyanate esters, prepolymerized cyanate esters having a molecular weight greater than 400, preferably from 400 to 6000, or mixtures thereof, or may be in the form of a BT resin comprising cyanate ester and bismaleimide in a weight ratio of from about 1:1 to about 20:1 and, preferably, from about 4:1 to about 20:1.

The composition of this invention may further comprise additional polymerizable components including a bismaleimide. The bismaleimides that may be used in the present invention, either as polymerizable components or in combination with cyanates in the form of BT resins as set forth herein above, are organic compounds containing two maleimide groups and are prepared generally from maleic anhydride and diamines.

Bismaleimides may be described by the general formula:

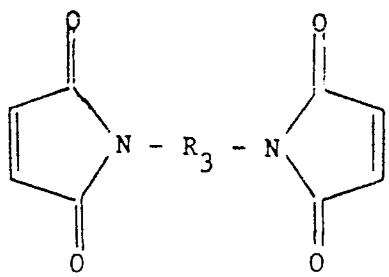

wherein $R^3$ is a divalent aromatic or alicyclic organic group>

The preferred bismaleimides are derived from aromatic diamines and most preferred are those wherein $R^3$ is a polynuclear aromatic radical. Examples of such bismaleimides include 2,2-bis(4-aminophenoxy-4-phenyl) propane bismaleimide, 4,4′-bis(3-aminophenoxy) diphenyl sulfone bismaleimide, 1,4-bis(3-aminophenyl isopropylidene) benzene bismaleimide and bis(4-aminophenyl) methane bismaleimide. The bismaleimides may be used singly or as mixtures.

It is also possible to use bismaleimides in which up to 50% of the maleimide groups have been replaced by substituted maleimide groups such as methyl maleimides or halomaleimides or by the nadimide, methyl nadimide, or isomaleimide groups. Portions of the maleimide groups may also be replaced by succinimide, phthalimide, or substituted succinimide and phthalimide groups.

The bismaleimide may be prepared by a number of well-known methods from maleic anhydride and diamines, and a great many are readily available from commercial sources.

Cure accelerators may also be used in the practice of this invention to facilitate cyanate trimerization and/or epoxy/cyanate coreaction. The cure accelerators and catalysts are those conventionally used for these purposes, and may include phenols, tertiary amines, alcohols, salts such as LiCl, and soluble transition metal complexes such as zinc octoate, copper acetylacetonate, cobalt naphthenate and the like. U.S. Patent Nos. 3,694,410 and 4,528,36 describe several such catalysts and levels for their effective use.

When the compositions comprise bismaleimides, peroxide cure accelerators such as dicumyl peroxide, di-t-butyl peroxide, t-butyl perbenzoate, and 1,1-bis(t-butylperoxy) cyclohexane may also be inlcuded. Free radical inhibitors such as phenothiazine or benzoquinone are frequently employed in the resin art to increase storage stability, and these compounds may also be included in the compositions of this invention.

These components may be added to the composition at any desired level. Cure accelerators, when employed, will be present in an amount of from about 0.001 to 5 weight percent, preferably about 0.01 to 2 weight percent, again based on total composition. The peroxides are conventionally used at levels of 0.01 to 1 pbw per 10 parts of bismaleimide in a formulation.

The compositions of this invention will most often be employed in combination with fiber reinforcement in the preparation of structural composites. The structural fibers which may be used in preparing such composites include carbon, graphite, glass, silicon carbide, poly(benzothiazole), poly(benzimidazole), poly(benzoxazole), alumina, titania, boron, and aromatic polyamide fibers. These fibers are characterized by a

tensile strength of greater than 100,000 psi, a tensile modulus of greater than two million psi, and a decomposition temperature of greater than 200°C. The fibers may be used in the form of continuous tows (1000 to 400,000 filaments each), woven cloth, whiskers, chopped fiber or random mat. The preferred fibers are carbon fibers, aromatic polyamide fiber such as Kevlar 49 fiber (obtained from E.I. DuPont de Nemours, Inc.), silicon carbide fibers, and glass fibers. Composites generally comprise about 20 to about 80 percent by weight of structural fiber, preferably between 30 and 75 percent by weight.

The structural fiber will ordinarily be combined with the curable resin compositions of this invention to provide preimpregnated reinforcement or prepreg. Prepreg may be prepared by any of the several techniques well known and commonly used in the art. For example, the resin may be first coated as a thin film on release paper. Aligned tows of carbon fiber are then pressed between two sheets of the coated paper and passed through a series of heated rollers to effect wet-out of the fiber tows by the resin. The resulting prepreg is then allowed to cool and is taken up on a spool. Tacky, drapable prepreg can be obtained with the curable compositions of this invention having a long shelf life, typically four to six weeks.

Composites may be prepared from the prepreg by curing with heat, optionally under pressure. Composites may also be prepared from the curable compositions of this invention via wet lay-up followed by compression molding, by transfer molding, or by resin injection, as described in European Patent Application 0019149, published November 26, 1980. Composites employing the compositions of this invention may also be fabricated in a filament-winding operation, wherein preimpreganted tow is wound over a rotating and removable form or mandrel and cured in an oven or autoclave.

In addition to structural fibers, the composition may also contain particulate fillers such as talc, mica, calcium carbonate, aluminium trihydrate, glass microballoons, phenolic thermospheres, and carbon black as well as thixotropic additives such as fumed silica. Up to half of the weight of structural fiber in the composition may be replaced by one or more of such fillers.

## EXAMPLES

The practice of this invention will be better understood by consideration of the following examples. These examples are provided as specific illustrations of the practice of this invention and are not intended to be in any way limiting of the scope of this invention.

### Example 1

A three-liter flask equipped with a paddle stirrer, thermometer, temperature controller, an inlet and outlet for inert gas, and an electric heating mantle was charged with 560 g of molten (70°C) BT-2160 resin (Mitsubishi Gas Chemical Co.). BT-2160 is a 10/90 mixture by weight of methylene dianiline bismaleimide with bisphenol A dicyanate, having approximately 16 percent reacted cyanate groups. The resin was heated to 140°C, and then 80 g of powdered (~200 mesh size) ARDEL D-100 polyarylate were added. The mixture was heated for one hour at 140°C to provide a homogeneous blend. After cooling the mixture to 120°C, 240 g of Dow DEN-431 epoxy resin were added. The mixture was maintained at 120°C for 30 minutes and then discharged into pans for cooling and storage.

The resulting resin was used to make a unidirectional prepreg tape with polyacrylonitrile-based carbon fiber (THORNEL® T-300, from Amoco Performance Products, Inc.; typical characteristics are 500 kpsi tensile strength; 33 mpsi Young's modulus; 1.76 g/cc density and 12,000 filaments per tow). The finished tape contained approximately 32 wt% resin, had a fiber area weight of 145 g/m$^2$ and was 6 inches wide.

10-ply laminate (6" x 12") with a ply orientation of $[(\pm 25),90]_s$ was laid up with this prepreg and cured, first in an autoclave for 4 hours at 180°C, then in a forced air oven for 4 hours at 246°C. Five 1" x 10" test specimens cut from the laminate were tested to determine the edge delamination strength (EDS). The EDS test has been implemented in the aerospace industry to assess the toughness of composites. The test procedure followed was that set forth in SAMPE Journal, vol. 18, No. 4, July/August 1982, p. 8. The physical properties of the laminate and of the matrix resin are summarized in Table 1.

Example 2

BT-2160 resin, 466 g, was heated to 120°C. A hot solution of 40 g of ULTEM 100 polyetherimide resin in 200 g of DOW DEN-431 epoxy resin, prepared by heating the two components for one hour, was added with vigorous stirring over a 10-minute period. The homogeneous BT/epoxy/ULTEM mixture was heated for an additional 90 minutes at 120°C, then discharged into pans.

A undirectional prepreg tape was made with this mixture and T-300 fiber, and laminates were laid up, cured, and tested as in Example 1. The physical properties of the matrix resin and laminate are summarized in Table I.

Control A

A composition consisting of 700 g of BT-2160 resin and 300 g of Dow DEN-431 epoxy resin was prepared substantially by the procedure of Example 1, giving a composition with an epoxy/BT weight ratio equivalent to those of Examples 1 and 2. Unidirectional prepreg tape was made with this resin and T-300 fiber and tested as before.

TABLE I

| Example: | 1 | 2 | A |
|---|---|---|---|
| **Components** | | | |
| BT-2160 (wt%) | 63.6 | 66.0 | 70 |
| Epoxy Resin (wt%) | 27.3 | 28.3 | 30 |
| Thermoplastic A (wt%) | 9.1 | 5.7 | -- |
| Thermoplastic B (wt%) | -- | -- | -- |
| **Casting Properties** | | | |
| Tg (°C) | 200 | 205 | 200 |
| Water Abs.: | | | |
| soak 5 days/160°F | 0.94 | 0.96 | 0.98 |
| **Composite Properties** | | | |
| EDS (kpsi) | 40.0 | 40.1 | 37.0 |
| Ult. Str. (kpsi) | 67.7 | 73.4 | 63.4 |
| Fiber Content (Vol %) | 60.4 | 60.2 | 59.1 |

Notes:

EDS=Edge Delamination Strength; Ult. Str.=Ultimate Strength, see text; Tg = DuPont DMA-982, Heating Rate 10 deg/min.

Thermoplastic A = Ultem-1000 polyetherimide, General Electric Co.

Thermoplastic B = Ardel D-100 polyarylate, Amoco Performance Products, Inc.

Casting Properties determined for neat resin castings cured at 179°C/2 hr, using 2" x 0.4" x 1.2" specimens for water soak testing.

It will be apparent from a consideration of the properties of Examples 1 and 2 in comparison with those of Control Example A that the compositions of this invention exhibit significantly improved properties, particularly in EDS characteristics, together with a moderate improvement in water uptake tendency.

Comparative Examples

Compositions based on PPO, cyanate and epoxy resin were disclosed in U.S. Patent No. 4,496,695 for making prepreg by a solvent method. The following Comparative Examples were carried out to attempt the preparation of such compositions in a solvent-free condition for use in a hot-melt process for making prepreg.

The poly(2,6-dimethyl-1,4-phenylene oxide) thermoplastic (PPO) used in these Comparative Examples was obtained as a powder (~200 mesh size) from Aldrich Chemical Co. The powder was combined with the other resin components following the procedures described in Examples 1 and 2.

In comparative Example B, the PPO (20 g) remained immiscible and undissolved in the BT-2160 (140 g) component after stirring and heating at 140°C for 2 hours.

In Comparative Example C, the PPO (40 g) remained immiscible and undissolved in the epoxy resin (DEN-431, 200 g) after stirring and heating at 150°C for 90 minutes.

In Comparative Example D, the PPO (20 g) was immiscible in a blend of BT-2160/DEN-431 (120/60 g) after stirring and heating at 130°C for 3 hours.

Coating processes require homogeneous resin mixtures to ensure uniform distribution of the thermoplastic polymer in the resin matrix. Thus, even though the resin compositions of the prior art may exhibit properties that could be useful in composite structures, non-homogeneous compositions such as those described in the Comparative Examples cannot be used in a hot-melt impregnating process.

Example 3

Following the general procedure of Example 1, a homogeneous composition of 670 g of BT-2160 resin and 70 g of powdered P-1800 polysulfone (~200 mesh size) was prepared by heating for one hour at 140°C, then combined at 120°C with 230 g of Den-431 epoxy resin (Dow Chemical Co.) and heated for an additional hour. The blend was mixed with 30 g of fumed silica, coated on release paper, and used to make unidirectional prepreg tape with T-300 fiber. The tape had a width of 6", a fiber area weight of 145 g/m$^2$, and a resin content of 32 wt%. A unidirectional laminate was laid up with this prepreg and cured in an autoclave in which the maximum temperature was 179°C for 2 hr. and the maximum pressure was 100 psi. The zero degree compressive strength of a test specimen conditioned for two weeks in 160°F water, measured according to a modified ASTM D-695 procedure, was 134,000 psi at 270°F.

Example 4

Using substantially the procedure of Example 1, 300 g of BT-2160 resin and 300 g of BT-2170 resin were combined at 120°C. (BT-2170 is a more advanced version of BT-2160 having approximately 45 percent of the cyanate groups reacted.) The bismaleimide of 4,4′-bis(3-aminophenoxy) diphenyl sulfone (86 g) and a hot (90°C) solution of 13 g of Ultem 1000 polyetherimide resin in 243 g of Dow DEN-431 epoxy novolak resin were then added. The mixture was cooled to 100°C and held for 20 min., then discharged into pans. The resulting resin was coated on a release paper and used to make unidirectional prepreg tape with T-300 fiber. Laminates prepared by the procedures of Examples 1 had an edge delamination strength of 36.7 kpsi.

Example 5

A composition comprising 1220 g of BT-2160 resin, a hot (120°C) solution of 100 g of Ultem 1000 polyetherimide resin in 500 g of DEN-431 epoxy resin and 300 g of 4,4′-bis(3-aminophenoxy)diphenyl sulfone bismaleimide was prepared by heating at 120°C, using substantially the procedures of Example 1. The bismaleimide was added as a powder over a 10-minute period. Unidirectional prepreg tape was made with this resin and T-300 fiber. Laminates prepared from the tape had an edge delamination strength of 36 kpsi.

Example 6

Using the equipment substantially as for Example 1, a composition comprising 140 g of bisphenol A dicyanate prepolymer having approximately 15% polymerized cyanate (RDX 80352 from Interez, Inc.) and 20 g of Ardel D-100 thermoplastic was prepared by first heating for 45 minutes at 140°C to provide a homgeneous mixture, then cooling to 130°C and adding 60 g of DEN-431 epoxy resin. The mixture was stirred for 15 minutes at 130°C, degasssed in a vacuum oven, poured into a glass mold and cured in a forced air oven for 4 hours at 120°C followed by 6 hours at 179°C. The tensile properties of the cast resin are reported in Table II.

Comparative Example E

A control composition omitting the thermoplastic was prepared according to the procedure of Example 1, using 170 g of a bisphenol A dicyanate prepolymer and 30 g of Dow DEN-431 epoxy resin. The tensile properties of this cast resin are reported in Table II.

TABLE II

| Example: | 6 | E |
|---|---|---|
| Composition | | |
| Dicyanate Prepolymer | 63.6 | 70 |
| DEN-431 Epoxy Resin | 27.3 | 30 |
| Ardel D-100 | 9.1 | -- |
| Casting Properties[a] | | |
| Tensile strength (kpsi) | 7.6 | 6.3 |
| Tensile modulus (kpsi) | 470 | 500 |
| Elongation (%) | 1.8 | 1.4 |
| Tg (°C)[b] | 220 | 220 |

Notes:

(a) Tensile properties measured according to ASTM D-638

(b) Tg measured by DuPont DMA 982, heating rate 10°C/min.

It will again be apparent that the compositions of this invention exhibit improved tensile strengths compared with compositions and the thermoplastic.

This invention will thus be seen to be a homogeneous, solvent-free, curable composition comprising a polymerizable cyanate ester, polymerizable epoxy resin, thermoplastic, and cured resins prepared from these compositions. The compositions may further comprise one or more additional polymerizable curable components, including bismaleimides, and may include cure accelerators, fillers, fiber reinforcement, heat and light stabilizers, pigments, dyes and the like. The compositions of this invention may be used as matrix resins for composites, as high temperature coatings and as adhesives. Fiber-reinforced composites based on these compositions may be used as aircraft parts such as wing skins, wing-to-body fairings, floor panels, flaps, radomes; as automotive parts, such as drive shafts, bumpers, and springs; and in the construction of pressure vessels, tanks and pipes. They may also be suitable for use as protective armor on military vehicles and for sporting goods applications such as golf club shafts, tennis rackets, and fishing rods. Further additions and modifications may also be made without departing from the spirit and scope of the invention, which is defined by the appended claims.

## Claims

1. A curable homogeneous solvent-free resin formulation comprising a cyanate ester, an epoxy resin and a thermoplastic polymer having a glass transition temperature (Tg) of at least 150°C, said thermoplastic polymer being selected from the group consisting of polyarylates and polyetherimides.

2. The resin of claim 1, wherein the cyanate ester is the dicyanate of a bisphenol.

3. The resin of claim 1, wherein the cyanate ester is the dicyanate of bisphenol A.

4. The resin of claim 1, which also includes a bismaleimide.

5. The resin of claim 1, wherein the thermoplastic polymer is a polyetherimide.

6. The resin of claim 1, wherein the thermoplastic polymer is a polyarylate.

7. The composition of claim 1 wherein the epoxy resin is selected from the group consisting of polyglycidyl derivatives of phenolic compounds, polyglycidyl derivatives of phenol-formaldehyde novolaks, polyglycidyl derivatives of an amine compound, and polyglycidyl esters of carboxylic compounds.

8. The composition of claim 1 further comprising a structural fiber.

9. The composition of claim 8 wherein the structural fiber is a carbon fiber.

10. A cured composite comprising a thermoset resin obtained by curing the composition of claim 1 and a structural fiber.